# EUROPEAN PATENT SPECIFICATION

(11) **EP 3 315 532 B1**
(45) Date of publication and mention of the grant of the patent: **30.12.2020**
(21) Application number: 17806414.3
(22) Date of filing: 19.05.2017
(51) Int. Cl.: C08G 69/06, C08G 63/80

(54) **METHOD FOR PRODUCING POLYMER AND APPARATUS FOR PRODUCING POLYMER**
POLYMERHERSTELLUNGSVERFAHREN UND -HERSTELLUNGSVORRICHTUNG
PROCÉDÉ DE PRODUCTION DE POLYMÈRE ET DISPOSITIF DE PRODUCTION

(30) Priority: 30.05.2016 JP 2016106885
(43) Date of publication of application: 02.05.2018
(73) Proprietor: UNITIKA LTD., Amagasaki-shi Hyogo 660-0824 (JP)
(72) Inventor: NAKAI, Makoto, Uji-shi, Kyoto 611-0021 (JP)
(74) Representative: Vigand, Philippe
(86) International application number: PCT/JP2017/018854
(87) International publication number: WO 2017/208857

(56) References cited:
- EP-A1- 2 977 411
- JP-A- H0 873 587
- JP-A- 2001 233 958
- JP-A- 2006 160 881
- JP-A- 2014 101 494
- JP-A- 2016 094 508
- US-B1- 6 774 208
- Intensiv Mischer: "Henschel Mixing Technology Produktinformation Product information", , 13 July 2015 (2015-07-13), XP055662819, Retrieved from the Internet: URL:https://www.zeppelin-systems.com/media /zeppelin-henschel-intensiv-prozess-labor- mischer-high-intensity-process-laboratory- mixer.pdf [retrieved on 2020-01-28] & Zeppelin: "High intensity mixer / Zeppelin Systems", , 13 July 2015 (2015-07-13), XP055662825, Retrieved from the Internet: URL:https://web.archive.org/web/2015071303 5037/http://www.zeppelin-systems.com/en/pr oducts-solutions/mixers/high-intensity-mix er.html [retrieved on 2020-01-28]

## Description

### [Technical Field]

The present disclosure relates to a method for producing a polymer and an apparatus for producing a polymer, in particular, a method for producing a polymer and an apparatus for producing a polymer, on the basis of a solid-phase polymerization method.

### [Background Art]

The solid-phase polymerization has been widely used in the production of polymers such as polyester and heat-resistant polyamides (JP2016-79203A). Common is a method in which a monomer, a salt, a granular material of a prepolymer to be raw materials are heated at a temperature equal to or lower than the melting point of the polymer to be produced. Most heating methods utilize heat conduction from the high-temperature inner wall of the reaction vessel (JP2016-79203A). US 6,774,208 B1 utilizes a heating method wherein heat is generated by friction between particles, and between fluidizing blades and particles. As compared with a melt polymerization method, a solid-phase polymerization method is capable of performing production at a lower temperature, and accordingly the solid-phase polymerization method can prevent the thermal degradation of the polymer during polymerization. In addition, a solid-phase polymerization has an advantage that crystallization concentrates the reactive points in amorphous regions, and accordingly the produced polymer is allowed to have a high molecular weight.

However, a solid-phase polymerization method has the following problem. Specifically, in a solid-phase polymerization method, an adhesion of the polymer to the inner wall of a reaction vessel during production tends to occur. When the adhesion occurs, the thermal conduction from the reaction vessel to the granular raw material is disturbed. As compared with a liquid, a granular material is originally low in the efficiency of the heat transfer from the inner wall of the reaction vessel, and hence the reduction of the heat transfer amount due to the adhesion is directly connected to the productivity decline of the polymer. In addition, when the adhesion amount is increased with the repeat of the production process, the polymerization conditions are varied with time, and the quality of the polymer is degraded. Moreover, in a polymerization reaction, in general, the granules tend to be mutually agglomerated, and hence the removal of the adhered substance is not easy. From these reasons, the prevention of the adhesion is a significant problem in the production and development of polymers on the basis of the solid-phase polymerization method.

The adhesion of the granular material to the inner wall of the reaction vessel occurs according to the following mechanism. The raw granular material brought into contact with the inner wall of a reactor (in this stage, the degree of the adhesion is not so strong) undergoes rapidly proceeding polymerization reaction due to the highest temperature of the inner wall of the reaction vessel serving as the contact surface. In addition, in the situation in which the agglomeration between the particles dominates the migration of the particles due to stirring or gravity, the adhesion is expected to grow.

On the contrary, if the temperature of the inner wall of the reaction vessel can be set to a temperature equal to or lower than the polymerization temperature, the adhesion due to the above-described mechanism is expected not to occur. However, when the temperature of the inner wall of the reaction vessel is set to a temperature equal to or lower than the polymerization temperature, as a matter of course, the temperature of the granular raw material cannot be increased to the temperature required for the polymerization by the heat transfer from the reaction vessel.

### [Summary of Disclosure]

### [Technical Problem]

An object of the present disclosure is to provide a method for producing a polymer by solid-phase polymerization, applicable to many types of polymers, by solving the problem of the adhesion to the inner wall of the reaction vessel in view of such problems as described above.

### [Solution to Problem]

The present inventor performed a series of diligent studies in order to solve such problems, and consequently has paid attention to the stirring heat as a supply source of heat to compensate the deficient heat. In other words, the present inventor has reached the present disclosure by paying attention to the heating of the raw material by use of the stirring heat while the temperature of the inner wall of the reaction vessel is being maintained to be lower than the polymerization temperature.

Specifically, the method for producing a polymer of the present disclosure solid-phase polymerizes a granular raw material, in a reaction vessel equipped with a stirrer, by heating the granular raw material with the stirring heat to the polymerization temperature of the granular raw material higher than the temperature of the inner wall of the reaction vessel, while the temperature of the inner wall of the reaction vessel is being maintained to be lower than the polymerization temperature of the granular raw material.

The apparatus for producing a polymer of the present disclosure has a reaction vessel equipped with a stirrer, and
the production apparatus solid-phase polymerizes a granular raw material by heating the granular raw material with the stirring heat due to the stirrer to the polymerization temperature of the granular raw material higher than the temperature of the inner wall of the reaction vessel, while the temperature of the inner wall of the reaction vessel is being maintained to be lower than the polymerization temperature of the granular raw material.

The present invention is defined by claims 1 and 7.

### [Advantageous Effects of Disclosure]

According to the present disclosure, a solid-phase polymerization is performed while the temperature of the inner wall of the reaction vessel is being maintained to be lower than the polymerization temperature of the granular raw material, accordingly the polymerization reaction is hardly allowed to proceed even when the granular raw material is brought into contact with the inner wall of the reaction vessel, and consequently it is possible to prevent the adhesion of the granular raw material to the inner wall of the reaction vessel. Thus, it is possible to perform a production of a polymer on the basis of a solid-phase polymerization method, the production being high in productivity and satisfactory in the quality of the product.

### [Brief Description of Drawing]

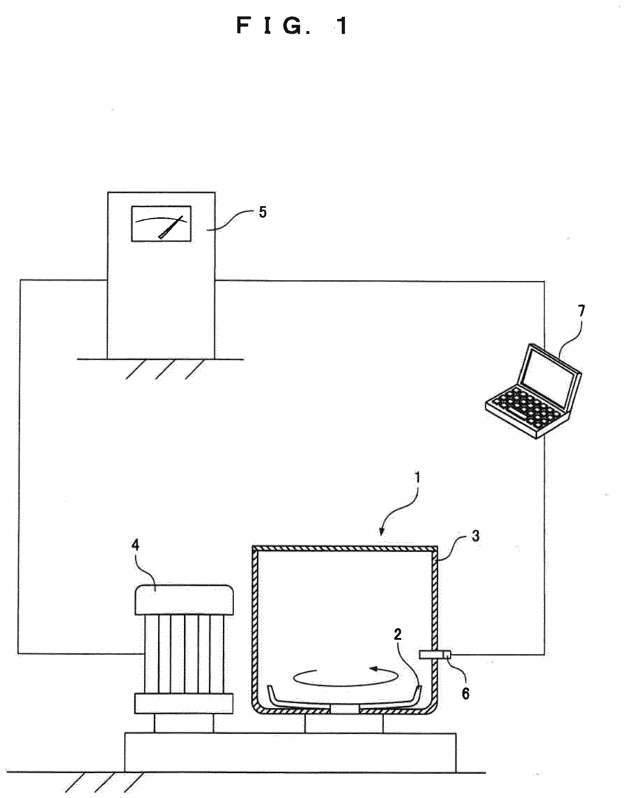

[FIG. 1] FIG. 1 is a diagram illustrating an apparatus for implementing the method for producing a polymer of the present disclosure.

### [Description of Embodiments]

FIG. 1 shows a reaction vessel 1 used in the implementation of the method for producing a polymer of the present disclosure. The reaction vessel 1 is required to have a mechanism and performances capable of generating stirring heat. As the reaction vessel 1 of FIG. 1, a mixer having a stirring blade 2 rotating at high speed is used. Reference numeral 3 denotes the vessel of the reaction vessel 1. The stirring blade 2 uses, as a motive power source, a motor 4 having a capacity to withstand the load required for the production of the stirring heat generated by stirring the granular raw material for producing a polymer. The stirring blade 2 also simultaneously plays a role of a mixing apparatus for uniformizing a plurality of raw materials and the temperature distribution thereof. Specific examples of the reaction vessel 1 include apparatuses such as a Henschel mixer, a super mixer, a Cyclomix and a Loedige mixer. FIG. 1 shows a Henschel mixer. The reaction vessel 1 is provided with, if necessary, for example, a raw material input port, a product discharge port, and an intake-exhaust port.

The granular raw material is a raw material for a polymer such as a monomer, a salt, and a prepolymer, and is required to be a granular material in a solid state at the reaction temperature, namely, the polymerization temperature. On the other hand, the polymer obtained by a solid-phase polymerization is also a solid granular material at the reaction temperature, namely, the polymerization temperature. With a liquid, the stirring heat is hardly generated, and hence the advantageous effects of the present disclosure hardly appear. The size of the granular material is not particularly limited, but the average particle size of the granular material is preferably 5 mm or less. Even when the average particle size exceeds 5 mm, the present disclosure can be applied; a particulate material having a particle size of 5 mm or more intrinsically hardly adhere to the reaction vessel 1.

The granular raw material may be composed of a plurality of components. Moreover, if necessary, a terminal blocking agent, a catalyst, and other additives can be added to the granular raw material. The granular raw material may be partially in a liquid state due to a mixing component; however, the granular raw material is required wholly in a state allowing the solid components thereof to be brought into contact with each other to generate stirring heat.

Specific examples of the granular raw material include granular materials such as polyethylene terephthalate prepolymer, polyamide salts (polyamide-6,6 salt, polyamide-10,T salt), and polyamide oligomers (polyamide 10T oligomer, polyamide 9T oligomer, and polyamide 6T oligomer). Specific examples of the granular raw material may also include pellets.

The temperature conditions in a solid-phase polymerization require the temperature of the granular material to be higher than the temperature of the inner wall of the reaction vessel 1. In this case, the temperature of the granular material is preferably set at an appropriate polymerization temperature in consideration of the productivity and the product quality. On the other hand, the temperature of the inner wall of the vessel 3 in the reaction vessel 1 is required to be set so as to fall within a temperature region in which the polymerization little proceeds, namely, to be set at a temperature lower than the polymerization temperature.

The control of the temperature of the inner wall of the vessel 3 in the reaction vessel 1 may be carried out by a known methods using for example a heater, a steam, and a heating medium jacket.

It is preferable to control the stirring heat for controlling the temperature of the granular material. The number of rotations of or the load on the stirring blade 2 may be constant; however, the state of a material changes with the progression of the polymerization, and hence it is preferable to control the number of rotations of or the load on the motor 4 as the motive power source of the stirring blade 2. Examples of the control method include a method in which the temperature of granular material is monitored and reflected on the number of rotations, and a method in which the electric power value or the electric current value of the motor 4 is controlled. In most cases, it is necessary to use an inverter-controlled motor. In FIG. 1, reference numeral 5 denotes an inverter, reference numeral 6 denotes a temperature detector such as a thermocouple for monitoring the temperature of the granular material, and reference numeral 7 denotes a control computer.

As a method for controlling the motor 4 by using an inverter 5, it is preferable to use a stall prevention control. In the stall prevention control, when the value of the maximum number of rotations of the motor 4 and the value of the maximum current are set, the number of rotations is decreased in the case where the load on the motor 4 is large, and the motor 4 is operated at a lower set electric current corresponding to the electric current in the case where the number of rotations is decreased. When the load on the motor 4 is small, and the electric current value showing the load is smaller than the set value, the motor 4 rotates at a maximum number of rotations. The state of the material changes with the progression of the solid-phase polymerization, and hence the number of rotations for maintaining the temperature appropriate for the polymerization reaction is usually varied with time. It is also preferably possible to use a cascade control in which the temperature of the granular material is monitored with the detector 6, and the monitored temperature is reflected on the set electric current value of the stall prevention control based on the inverter 5.

The polymerization in the production method of the present disclosure is the solid-phase polymerization, and accordingly, the melting point of the polymer is equal to or higher than the temperature of the granular material.

The present disclosure is applicable irrespective of the type of the polymer, but polyamides are particularly preferable. In consideration of the condition that the raw material is solid at the reaction temperature, preferable as raw material monomers are granular materials of aminocaproic acid, various polyamide salts (such as polyamide 6,6 salt, polyamide 10,10 salt, polyamide 6,T salt, polyamide 9,T salt, polyamide 10,T salt and polyamide 12,T salt). It is also preferable to use, as raw materials, polyamide oligomers and low polymerization degree materials. In this case, for example, polyamide 6, polyamide 6,6, polyamide 11, polyamide 12, polyamide 6,T, polyamide 9,T, polyamide 10,T and polyamide 12,T are used in the forms of granular materials or pellets.

Among polyamides, to semi-aromatic polyamides usually produced by solid-phase polymerization, the present disclosure can be preferably applied. More preferable are semi-aromatic polyamides which are produced from dicarboxylic acids and diamines and in which 50 to 100 mol% of the dicarboxylic acids is terephthalic acid, because such polyamides are usable as raw materials for products excellent in heat resistance and mechanical properties.

In addition to polyamides, preferable are polyesters such as polyethylene terephthalate.

In the cases of any of polyamides, polyesters, and other polymers, the present disclosure can be equally applicable to homopolymers and copolymers.

The temperature of the granular material during solid-phase polymerization, namely, the polymerization temperature is equal to or lower than the melting points of the raw material and the polymer, and is preferably set at 150 to 280°C, for example, in the case of a polyamide. In this case, the temperature of the inner wall of the reaction vessel 1 is set to be lower than the temperature of the granular material by 100°C to 10°C.

If necessary, in succession to the solid-phase polymerization based on stirring heat according to the present disclosure, a polymerization can be made to further proceed by heating on the basis of common heat transfer. The occurrence of the adhesion to the reaction vessel 1 is limited to the first half of the polymerization reaction, and even when the heating due to such a heat transfer as described above is performed in the second half of the polymerization reaction, no adhesion occurs.

According to the present disclosure, the reaction time is shorter and the productivity is improved, as compared with the case where the polymerization is performed only on the basis of the heat transfer from the inner wall of the reaction vessel 1. The improvement effect of the productivity becomes more remarkable with the increase of the size of the reaction vessel.

When the present disclosure is applied to the condensation polymerization system for the resins such as polyamides and polyesters, water is generated from the interior of the granular material with the progression of the reaction. The atmosphere temperature during polymerization is 100°C or higher, the water is discharged as water vapor outside the system. However, before becoming water vapor, the water is expected to be captured in such a form as adsorbed water, on the surface of the granular material. With the increase of the amount of the adsorbed water, the friction resistance of the granular material is increased. The increase of the friction resistance of the granular material increases the load (electric current value) on the motor 4 and increases the stirring heat even when the number of rotations of the stirrer remains the same, so as to make an efficient heating feasible.

However, actually, the following phenomenon occurs: when the adsorbed water is increased in amount to excessively enhance the efficiency of the stirring heat, the polymerization reaction is accelerated, the moisture generation rate is thereby increased, accordingly the adsorbed water is further increased in amount, and consequently the stirring heat is increased with the increase of the stirring power and the polymerization reaction is further accelerated. In other words, the reaction comes to be an accelerated reaction, and the reaction system runs wild to be hardly controllable. In contrast, according to the present disclosure, by performing a solid-phase polymerization while the number of rotations of the stirrer is being varied, under the conditions that at least any one of the temperature of the granular raw material, the load on the stirrer, and the amount of the water discharged outside the reaction system is being detected, an excessive increase of the adsorbed water can be suppressed and the reaction state can be thereby counterbalanced and stabilized. Particularly, for example, by performing the above-described stall prevention control while the temperature of the granular material is being detected, the stirring heat amount is maintained constant, and thus the reaction state can be remarkably stabilized. Alternatively, while the amount of the water discharged outside the reaction system is being detected, by applying the above-described stall protection control or other controls when the amount of the discharged water comes to be excessively large, the degree of the stirring is regulated so as to be lowered, and thus the reaction state can be remarkably stabilized.

The polymer obtained by the production method of the present disclosure can be utilized in the method of melting processing, in exactly the same manner as in the polymers obtained by other heretofore known methods. For example, in the case of a polyamide, the polyamide can be utilized in the injection molding application. In such a case, it is preferable to add an additive such as a filler or a stabilizer, if necessary. Examples of the addition method include a method of adding an additive during polymerization of polyamide, or a method of melt kneading an additive in an obtained polyamide. Examples of such an additive include: fibrous reinforcing material such as a glass fiber and a carbon fiber; fillers such as silica, alumina, glass beads and graphite; and pigments such as titanium oxide and carbon black. In addition to these, examples of an additive include an antioxidant, an antistatic agent, a flame retardant and a flame retardant aid. In addition to application to injection molding, the above-described polymers can also be used as raw materials for fibers and films.

Examples of the applications of the injection molded products include vehicle components used in the periphery of a transmission, an engine, and a lamp; and electric/electronic components for office machines. Specific examples of the components used in the periphery of the transmission of a vehicle include base plates used for the pedestals for a shift lever and a gear box; specific examples of the components used in the periphery of an engine of a vehicle include a cylinder head cover, an engine mount, an air intake manifold, a throttle body, an air intake pipe, a radiator tank, a radiator support, a radiator hose, a water pump inlet, a water pump outlet, a thermostat housing, a cooling fan, a fan shroud, an oil pan, an oil filter housing, an oil filter cap, an oil level gauge, a timing belt cover, and an engine cover; and specific examples of the components in the periphery of a lamp of a vehicle include a lamp reflector, a lamp housing, a lamp extension, and a lamp socket. Specific examples of the electric/electronic component include a connector, an LED reflector, a switch, a sensor, a socket, a capacitor, a jack, a fuse holder, a relay, a coil bobbin, a resistor, and an IC or LED housing. Specific examples of the film include a speaker vibration plate, a film capacitor and an insulating film. Specific examples of the fiber include an air bag base cloth and a heat resistant filter.

### Examples

### Reference Example 1 (Production of a polyamide 10T salt powder)

To a ribbon blender-type reaction apparatus (volume: 600 L), 183.68 kg of a terephthalic acid powder having an average particle size of 80 µm and 0.76 kg of sodium hypophosphite monohydrate as a polymerization catalyst were fed, and the resulting mixture was heated to 170°C while being stirred in a sealed atmosphere of nitrogen at a number of rotations of 35 rpm. Subsequently, while the temperature of 170°C was being maintained, 198.89 kg of decanediamine heated to 110°C was continuously added to the terephthalic acid powder by using a liquid injection apparatus at a rate of 1.3 kg/min over approximately 2.5 hours. Meanwhile, the reactants were maintaining powder states. Subsequently, 16.67 kg of stearic acid as a terminal blocking agent was added to the reaction mixture to obtain a polyamide salt.

### Example 1

A Henschel mixer (volume: 1300 L) equipped with a stirring blade using as a motive power a 150-kW motor controlled by an inverter and a thermocouple for measuring the internal temperature was heated to 200°C in a flow of nitrogen gas, and 400 kg of the polyamide salt powder of Reference Example 1, a raw material, was placed in the Henschel mixer. The stirring blade was rotated at 360 rpm. The control of the reaction heat was started under the conditions that the upper limit value of the electric current of the stall protection function of the inverter for controlling the motor was set so as to be 143 A when due to the stirring heat, the temperature of the content exceeded the temperature of the reaction vessel and reached 236°C, in other words, when an overload exceeding the upper limit value of the electric current was generated, the number of rotations of the stirring blade was decreased, and the stirring was made feasible at a lighter load of a lower electric current corresponding to the decreased number of rotations. Successively, by controlling the upper limit value of the electric current for the stall protection according to the state of the content, the temperature of the content was maintained at 236°C ± 1°C. In this state, the polymerization reaction was performed for 60 minutes. Then, the use of the stall protection function was terminated, and the content was further stirred for 40 minutes with the number of rotations of the stirring blade fixed at 360 rpm. Finally, the temperature of the content was 245°C.

Subsequently, the content was transferred to another ribbon blender-type reaction vessel connected with piping while the nitrogen atmosphere was still being maintained. The temperature of the another reaction vessel was set at 255°C, the number of rotations of the stirrer of the another reaction vessel was set at 40 rpm, and thus the successive polymerization was performed substantially without using the stirring heat. The successive polymerization was performed for 3 hours, and then the product was cooled.

The relative viscosity of the obtained polyamide measured by using 96% sulfuric acid as a solvent, at a concentration of 1 g/dL, at 25°C was 2.28.

The obtained polyamide had a melting point of 316°C, was free from gel and able to be melted uniformly, and was suitable for melt processing such as molding processing.

The inner wall of the reaction vessel after the completion of the polymerization was observed, and the adhesion was slight both in the Henschel mixer and in the ribbon blender type vessel; thus, it was possible to perform continuous production under the same conditions either in the Henschel mixer or in the ribbon blender type vessel.

### Reference Example 2

To an esterification reactor in which a PET oligomer was present, a slurry composed of terephthalic acid and ethylene glycol in a molar ratio of 1/1.6 was continuously fed, an esterification reaction was performed under the conditions of a temperature of 250°C, a pressure of 0.1 MPa, and a residence time of 8 hours, and thus, a PET oligomer having a reaction rate of 95% was continuously obtained.

Into a polycondensation reactor, 60 kg of the resulting PET oligomer was transferred, then 17 g (an amount to be 2 × 10⁻⁴ mole in relation to 1 mole of the total acid component) of antimony trioxide was added, the pressure in the reactor was gradually reduced so as to be 1.2 hPa or less after 60 minutes, and the polymerization reaction was performed for 2 hours under stirring at a temperature of 280°C.

Subsequently, the strands of the polyester prepolymer dispensed from the reactor were cooled to approximately room temperature by using a cooling bath, and then cut into pellets.

### Example 2 (not according to the invention)

In a Henschel mixer (volume: 150 L) using as a motive power a 30-kW motor controlled by an inverter, 50 kg of the polyester prepolymer of Reference Example 2 was placed, and was heated in a flow of nitrogen gas while a stirring blade was being rotated at 100 rpm. After the temperature of the reaction vessel reached 200°C, while the temperature of 200°C was being maintained, the stirring blade was rotated at 730 rpm. Due to the stirring heat, the temperature of the content exceeded the temperature of the reaction vessel, and a solid-phase polymerization proceeded. The reaction was continued for 2 hours, and the final temperature of the content was 233°C. The content was dispensed after cooling, and a polyester was obtained. The limiting viscosity of the resulting polyester measured by using as a solvent an equal weight mixture of phenol and tetrachloroethane, at a temperature of 20°C was 1.08. The resulting polyester was free from gel and able to be melted uniformly, and was suitable for melt processing into fibers.

### Example 3

In a Henschel mixer having a volume of 20 L, the polyamide salt of Reference Example 1 was placed, and a solid-phase polymerization was started. During the reaction, the temperature of the granular material, the number of rotations of the stirring blade, the electric current value of the motor, and the amount of water discharged outside the reaction system were observed.

From such observations, it was found that at the elapsed times of approximately 50 minutes and approximately 2 hours and 30 minutes from the start of the reaction, the temperature of the granular material, the amount of the discharged water and the electric current value were steeply increased. In order to cope with these changes, the number of rotations of the stirring blade was decreased by a manual operation. As a result, the increases of the temperature of the granular material, the amount of the discharged water and the electric current value were suppressed. Subsequently, the number of rotations of the stirring blade was allowed to get back to the original value and the reaction was continued.

Owing to the above-described treatment, a polyamide was able to be obtained.

### Comparative Example 1

The ribbon blender type reaction vessel used in Example 1 was heated to 255°C in a flow of nitrogen gas, and 400 kg of the polyamide salt powder of Reference Example 1, the raw material, was placed in the ribbon blender type reaction vessel. The number of rotations was set at 40 rpm, and a polymerization was performed substantially without using the stirring heat. After the polymerization was performed for 12 hours, the product was cooled. The temperature of the content before cooling was 252°C.

The relative viscosity of the obtained polyamide measured by using 96% sulfuric acid as a solvent, at a concentration of 1 g/dL, at 25°C was 2.27.

The obtained polyamide had a melting point of 316°C, was free from gel and able to be melted uniformly, and was suitable for melt processing such as molding processing.

The inner wall of the reaction vessel after the completion of the polymerization was observed, and the inner wall was found to be covered with the adhered polymer. With this situation unchanged, the production was continuously performed under the same conditions, the temperature of the content before the start of the cooling after the polymerization for 12 hours was 242°C. The relative viscosity of the obtained polyamide was 2.03, to be considerably lower than the relative viscosity of the first batch, and the subsequent molding processing was difficult.

### [Industrial Applicability]

The method for producing a polymer of the present disclosure is excellent in production efficiency because of utilizing stirring heat, and moreover, is satisfactory in the stability of the operation because the adhesion to the inner wall of the reaction vessel was solved. Consequently, the method for producing a polymer of the present invention is useful in the field of the production of polyamides on the basis of solid-phase polymerization, and in particular, for example, in the field of the production of semi-aromatic polyamides.

## Claims

1. A method for producing a polyamide, wherein the method solid-phase polymerizes a granular raw material at a polymerization temperature of the granular material that is equal to or lower than the melting points of the raw material and the polyamide, in a reaction vessel equipped with a stirrer and wherein the inner wall of the reaction vessel is set at a temperature lower than the polymerization temperature of the granular raw material so as to fall within a temperature region lower than the temperature of the granular material by 100°C to 10°C in which the polymerization little proceeds, by heating the granular raw material with a stirring heat to the polymerization temperature of the granular raw material higher than the temperature of the inner wall of the reaction vessel, while the temperature of the inner wall of the reaction vessel is being maintained to be lower than the polymerization temperature of the granular raw material and within a temperature region lower than the temperature of the granular material by 100°C to 10°C in which the polymerization little proceeds, wherein the control of the temperature of the inner wall of the vessel in the reaction vessel is carried out by a known method using for example a heater, a steam and a heating medium jacket.

2. The method for producing a polyamide according to claim 1, wherein a polyamide polymer is solid-phase polymerized, the polyamide comprising a dicarboxylic acid and a diamine, and 50 to 100 mol% of the dicarboxylic acid being terephthalic acid.

3. The method for producing a polyamide according to claim 1, wherein a solid-phase polymerization is performed while a number of rotations of the stirrer is being varied, under the conditions that a temperature of a granular raw material and/or a load on the stirrer is being detected.

4. The method for producing a polyamide according to claim 3, wherein the solid-phase polymerization is performed while the number of rotations of the stirrer is being varied in order to prevent a wild running of a reaction system due to an excessive increase of adsorbed water to a granular material, under the conditions that at least any one of a temperature of the granular raw material, a load on the stirrer, and an amount of water discharged outside a reaction system is being detected.

5. The method for producing a polyamide according to claim 3 or 4, wherein the number of rotations of the stirrer is varied by using a stall prevention function of an inverter controlling a motor of the stirrer.

6. An apparatus for implementing the method for producing a polyamide of claim 1,
wherein the apparatus has a reaction vessel (1) equipped with a stirrer (2) capable of generating stirring heat to heat the granular raw material to a polymerization temperature of the granular raw material that is equal to or lower than the melting points of the raw material and the polyamide and higher than a temperature of an inner wall (3) of the reaction vessel (1),
a motor (4), which is a motive power source of the stirrer, having a capacity to withstand the load required for the production of the stirring heat generated by stirring the granular raw material for producing polyamide,
an inverter (5) for controlling the motor (4),
a temperature detector (6) for monitoring the temperature of the granular material,
a control computer (7) for controlling the stirring heat for controlling the temperature of the granular material, and
a means to set and maintain the temperature of the inner wall (3) of the reaction vessel (1) at a temperature lower than the polymerization temperature of the granular material and within a temperature region lower than the temperature of the granular material by 100°C to 10°C in which the polymerization little proceeds.

## Patentansprüche

1. Verfahren zur Herstellung eines Polyamids, wobei das Verfahren das Polymerisieren in der festen Phase eines Rohgranulats bei einer Polymerisationstemperatur des Rohgranulats umfasst, die gleich den oder niedriger als die Schmelzpunkte des Rohmaterials und des Polyamids sind, in einem Reaktionsgefäß, das mit ein Rührer ausgestattet ist, und wobei die Innenwand des Reaktionsgefäßes auf eine Temperatur eingestellt wird, die niedriger ist als die Polymerisationstemperatur des Rohgranulats, um in einem Temperaturbereich zu liegen, der um 100 °C bis 10 °C niedriger ist als die Temperatur des Granulats, in welchem die Polymerisation wenig fortschreitet, durch Erwärmen des Rohgranulats mit einer Rührwärme auf die Polymerisationstemperatur des Rohgranulats, die höher als die Temperatur der Innenwand des Reaktionsgefäßes ist, während die Temperatur der Innenwand des Reaktionsgefäßes derart gehalten wird, dass sie niedriger als die Polymerisationstemperatur des Rohgranulats ist und in einem Temperaturbereich liegt, der um 100 °C bis 10 °C niedriger ist als die Temperatur des Granulats, in welchem die Polymerisation wenig fortschreitet, wobei die Regelung der Temperatur der Innenwand des Gefäßes in dem Reaktionsgefäß mit einem bekannten Verfahren durchgeführt wird, zum Beispiel unter Verwendung einer Heizung, eines Dampf- und eines Heizmediummantels.

2. Verfahren zur Herstellung eines Polyamids nach Anspruch 1, wobei ein Polyamidpolymer in der festen Phase polymerisiert wird, wobei das Polyamid eine Dicarbonsäure und ein Diamin umfasst und wobei 50 bis 100 Mol-% der Dicarbonsäure Terephthalsäure sind.

3. Verfahren zur Herstellung eines Polyamids nach Anspruch 1, wobei eine Polymerisation in der festen Phase durchgeführt wird, während eine Anzahl von Umdrehungen des Rührers variiert wird, unter den Bedingungen, dass eine Temperatur eines Rohgranulats und/oder eine Last an dem Rührer erkannt wird.

4. Verfahren zur Herstellung eines Polyamids nach Anspruch 3, wobei die Polymerisation in der festen Phase durchgeführt wird, während die Anzahl von Umdrehungen des Rührers variiert wird, um einen wilden Ablauf eines Reaktionssystems aufgrund einer übermäßigen Zunahme des adsorbierten Wassers in einem Granulat zu verhindern, unter den Bedingungen, dass zumindest eines der folgenden erkannt wird: eine Temperatur des Rohgranulats, eine Last an dem Rührer und eine Wassermenge, die außerhalb eines Reaktionssystem abgeführt wird.

5. Verfahren zur Herstellung eines Polyamids nach Anspruch 3 oder 4, wobei die Anzahl von Umdrehungen des Rührers unter Verwendung einer Schutzfunktion eines Wechselrichters gegen Anhalten verändert wird, welcher einen Motor des Rührers steuert.

6. Vorrichtung zur Durchführung des Verfahrens zur Herstellung eines Polyamids nach Anspruch 1, wobei die Vorrichtung aufweist:
ein Reaktionsgefäß (1) mit einem Rührer (2), der Rührwärme erzeugen kann, um das Rohgranulat auf eine Polymerisationstemperatur des Rohgranulats zu erwärmen, die gleich oder niedriger als die Schmelzpunkte des Rohmaterials und des Polyamids und höher als eine Temperatur einer Innenwand (3) des Reaktionsgefäßes (1) ist,
einen Motor (4), der eine Antriebskraftquelle des Rührers ist und die Fähigkeit aufweist, der Last standzuhalten, die für die Herstellung der durch Rühren des Rohgranulats erzeugten Rührwärme zur Herstellung von Polyamid erforderlich ist,
einen Wechselrichter (5) zur Steuerung des Motors (4),
einen Temperaturfühler (6) zur Überwachung der Temperatur des Granulats,
einen Steuerungscomputer (7) zur Steuerung der Rührwärme zum Regeln der Temperatur des Granulats, und
Mittel zur Einstellung und Beibehaltung der Temperatur der Innenwand (3) des Reaktionsgefäßes (1) auf einer Temperatur, die niedriger ist als die Polymerisationstemperatur des Granulats und in einem Temperaturbereich liegt, der um 100 °C bis 10 °C niedriger ist als die Temperatur des Granulats, in welchem die Polymerisation wenig fortschreitet.

## Revendications

1. Procédé pour produire un polyamide, lequel procédé polymérise en phase solide une matière première granulaire à une température de polymérisation du matériau granulaire qui est égale ou inférieure aux points de fusion de la matière première et du polyamide, dans un récipient réactionnel équipé d'un agitateur, et dans lequel la paroi intérieure du récipient réactionnel est réglée à une température inférieure à la température de polymérisation de la matière première granulaire de façon à se trouver dans une région de température, inférieure de 100°C à 10°C à la température du matériau granulaire, dans laquelle il se produit peu de polymérisation, par chauffage de la matière première granulaire avec une chaleur d'agitation jusqu'à la température de polymérisation de la matière première granulaire qui est supérieure à la température de la paroi intérieure du récipient réactionnel, cependant que la température de la paroi intérieure du récipient réactionnel est maintenue inférieure à la température de polymérisation de la matière première granulaire et dans une région de température, inférieure de 100°C à 10°C à la température du matériau granulaire, dans laquelle il se produit peu de polymérisation, dans lequel la régulation de la température de la paroi intérieure du récipient dans le récipient réactionnel est effectuée par un procédé connu utilisant par exemple un dispositif chauffant, une vapeur, et une chemise de milieu chauffant.

2. Procédé pour produire un polyamide selon la revendication 1, dans lequel un polymère de polyamide est polymérisé en phase solide, le polyamide comprenant un acide dicarboxylique et une diamine, et 50 à 100 % en moles de l'acide dicarboxylique étant de l'acide téréphtalique.

3. Procédé pour produire un polyamide selon la revendication 1, dans lequel une polymérisation en phase solide est effectuée cependant que le nombre de rotations de l'agitateur varie, dans des conditions où la température d'une matière première granulaire et/ou la charge sur l'agitateur sont détectées.

4. Procédé pour produire un polyamide selon la revendication 3, dans lequel la polymérisation en phase solide est effectuée cependant que le nombre de rotations de l'agitateur varie afin que soit empêché un fonctionnement sauvage du système réactionnel dû à une augmentation excessive de l'eau adsorbée sur un matériau granulaire, dans des conditions où au moins l'une quelconque parmi la température de la matière première granulaire, la charge sur l'agitateur, et la quantité d'eau déchargée en-dehors du système réactionnel, est détectée.

5. Procédé pour produire un polyamide selon la revendication 3 ou 4, dans lequel le nombre de rotations de l'agitateur varie par l'utilisation d'une fonction de prévention de décrochage d'un onduleur commandant un moteur de l'agitateur.

6. Dispositif pour exécuter le procédé pour produire un polyamide de la revendication 1,
lequel dispositif a un récipient réactionnel (1) équipé d'un agitateur (2) capable de générer une chaleur d'agitation pour chauffer la matière première granulaire à la température de polymérisation de la matière première granulaire qui est égale ou inférieure aux points de fusion de la matière première et du polyamide et supérieure à la température de la paroi intérieure (3) du récipient réactionnel (1),
un moteur (4), qui est une source d'énergie motrice de l'agitateur, ayant la capacité de supporter la charge requise pour la production de la chaleur d'agitation générée par agitation de la matière première granulaire pour produire le polyamide,
un onduleur (5) pour commander le moteur (4),
un détecteur de température (6) pour surveiller la température du matériau granulaire,
un ordinateur de commande (7) pour commander la chaleur d'agitation pour réguler la température du matériau granulaire, et
un moyen pour établir et maintenir la température de la paroi intérieure (3) du récipient réactionnel (1) à une température inférieure à la température de polymérisation du matériau granulaire et située dans une région de température, inférieure de 100°C à 10°C à la température du matériau granulaire, dans laquelle il se produit peu de polymérisation.
